# EUROPÄISCHE PATENTANMELDUNG

(11) **EP 4 047 734 A1**
(43) Veröffentlichungstag der Anmeldung: **24.08.2022**
(21) Anmeldenummer: 22153269.0
(22) Anmeldetag: 25.01.2022
(51) Int. Cl.: H01M 50/517, H01M 50/249, H01M 50/503, H01M 50/507, H01M 50/529, H01R 11/28, H01M 50/213, H01M 50/509, H01M 50/289

(54) **ZELLVERBINDER UND ZELLENSYSTEM**

(30) Priorität: 18.02.2021 DE 102021201571
(71) Anmelder: Robert Bosch GmbH, 70442 Stuttgart (DE)
(72) Erfinder: Goerzen, Alexander, 72414 Rangendingen (DE); Manka, Daniel, 74343 Sachsenheim (DE); Zink, Markus, 70439 Stuttgart (DE)

(57) **Zusammenfassung**

Die vorliegende Erfindung offenbart einen Zellverbinder (10) zum elektrisch leitenden Verbinden von Zellen (110, 111, 112) zur Speicherung von elektrischer Energie in einem Zellhalter (100), der Zellhalter (100) umfassend wenigstens zwei übereinander angeordnete Zellebenen (102, 103), der Zellverbinder (10) aufweisend einen Polkontakt (20) und einen Klemmabschnitt (40), wobei der Polkontakt (20) zur elektrischen Kontaktierung einer ersten Zelle (110) in einer ersten Zellebene (102) mit einer zweiten Zelle (111) in einer zweiten Zellebene (103) ausgestaltet ist, wobei der Klemmabschnitt (40) wenigstens zwei Kontaktfedern (42) zur klemmenden Kontaktierung mit wenigstens einer dritten Zelle (112) in der ersten Zellebene (102) und wenigstens eine Haltevorrichtung (44) zur kraftschlüssigen Halterung des Zellverbinders (10) in dem Zellhalter (100) umfasst. Ferner offenbart die vorliegende Erfindung ein Zellensystem (150), aufweisend wenigstens einen Zellhalter (100) sowie eine Vielzahl an Zellverbindern (10).

## Beschreibung

### Stand der Technik

Zellverbinder werden verwendet, um Zellen zur Speicherung von elektrischer Energie in einem Zellhalter zu größeren Batteriepacks elektrisch leitend zu verbinden und somit sowohl Energie als auch Leistung des Batteriepacks skalieren zu können.

Insbesondere im Bereich von Batteriepacks für die Industrie und/oder für den Automotive-Sektor werden die Zellverbinder mit den Batteriezellen fest verbunden. Zum festen Verbinden werden zumeist Technologien wie Widerstandsschweißen oder Bonding genutzt. Nachteilig sind den bekannten Ausgestaltungen und Verbindungsmethoden bei Zellverbindern, insbesondere bei einer großen Skalierung der Batteriepacks und somit einer hohen Anzahl an Zellen und Zellverbindern, lange Fertigungsdauern auf den entsprechenden Stationen für die Fertigung der Zellverbinder und die Montage der Zellverbinder mit den Zellen gemein. Ferner ist, insbesondere beim Widerstandsschweißen, aufgrund der benötigten Flächen eine einseitige Kontaktierung erschwert und/oder nicht möglich. Eine flexible Skalierung der Batteriepacks erfordert zumeist eine Anpassung der Zellverbinder und somit entsprechende Werkzeuge, wodurch erhöhter Prozessaufwand sowie Kosten-, Zeit- und Materialaufwand entsteht.

### Offenbarung der Erfindung

Die vorliegende Erfindung offenbart einen Zellverbinder und ein Zellensystem. Der Zellverbinder ist gemäß den Merkmalen des Anspruchs 1 ausgestaltet. Das

Zellensystem ist gemäß den Merkmalen des Anspruchs 9 ausgestaltet. Weitere Merkmale und Details der Erfindung ergeben sich aus den Unteransprüchen, der Beschreibung und den Zeichnungen.

Gemäß einem ersten Aspekt zeigt die vorliegende Erfindung einen Zellverbinder zum elektrisch leitenden Verbinden von Zellen zur Speicherung von elektrischer Energie in einem Zellhalter, der Zellhalter umfassend wenigstens zwei übereinander angeordnete Zellebenen, der Zellverbinder aufweisend einen Polkontakt und einen Klemmabschnitt, wobei der Polkontakt zur elektrischen Kontaktierung einer ersten Zelle in einer ersten Zellebene mit einer zweiten Zelle in einer zweiten Zellebene ausgestaltet ist, wobei der Klemmabschnitt wenigstens zwei Kontaktfedern zur klemmenden Kontaktierung mit wenigstens einer dritten Zelle in der ersten Zellebene und wenigstens eine Haltevorrichtung zur kraftschlüssigen Halterung des Zellverbinders in dem Zellhalter umfasst.

Die Zellen zur Speicherung von elektrischer Energie sind bevorzugt als Batterie oder Akkumulator ausgebildet. Die Zellen weisen bevorzugt eine zylinderförmige Ausgestaltung auf und haben eine Haupterstreckungsrichtung entlang einer Achse, um welche die Zellen bevorzugt rotationssymmetrisch oder im Wesentlichen rotationssymmetrisch ausgestaltet sind. Die Formulierung "X oder im Wesentlichen X" soll im Rahmen der Erfindung als mögliche, geringe Abweichung, bspw. aufgrund von Fertigungstoleranzen, Material- und/oder Prozesseigenschaften verstanden werden, ohne die zugrundeliegende, beabsichtigte Funktion des Merkmals zu verändern. Die Zellen weisen bevorzugt zwei Pole, jeweils einen Pol an den gegenüberliegenden Stirnenden der Zellen auf. Der Polkontakt dient der Kontaktierung einer ersten Zelle, insbesondere eines Pols der ersten Zelle, in einer ersten Zellebene mit einem Pol einer zweiten Zelle in einer zweiten Zellebene. Die erste Zellebene und die zweite Zellebene sind übereinander bevorzugt angeordnet. Als beispielhafte Veranschaulichung einer derartigen konstruktiven Ausgestaltung ist somit ein oberer Pol einer ersten Zelle in einer unteren ersten Zellebene mit einem unteren Pol einer zweiten Zelle in einer oberen zweiten Zellebene durch den Polkontakt elektrisch leitend verbindbar. Die beschriebene elektrisch leitende Verbindung ist somit beispielhaft eine Reihenschaltung in übereinander angeordneten Ebenen. Alternativ oder zusätzlich können die erste Zellebene und die zweite Zellebene jedoch auch gemeinsam ausgestaltet sein und somit in einer gemeinsamen Ebene angeordnet sein. Als beispielhafte Veranschaulichung einer derartigen konstruktiven Ausgestaltung ist somit wenigstens ein oberer Pol einer ersten Zelle in einer ersten Zellebene mit wenigstens einem unteren Pol einer zweiten Zelle in einer zweiten Zellebene durch den Polkontakt elektrisch leitend verbindbar, wobei die erste Zellebene und die zweite Zellebene und somit die erste Zelle und die zweite Zelle in einer gemeinsamen Ebene angeordnet sind. Die beschriebene elektrisch leitende Verbindung ist somit beispielhaft eine Reihenschaltung der ersten und zweiten Zelle in einer gemeinsamen Ebene.

Gemäß einer Ausgestaltung des Zellverbinders weist der Zellverbinder, als eine Kombination der beiden zuvor beschriebenen Ausgestaltungen, eine elektrisch leitende Verbindung von wenigstens einer ersten Zelle in einer ersten Ebene mit wenigstens einer zweiten Zelle in einer zweiten Ebene, die oberhalb der ersten Ebene angeordnet ist, und mit wenigstens einer weiteren zweiten Zelle in einer zweiten Ebene, die gemeinsam mit der ersten Ebene angeordnet ist, auf. Der derart ausgestaltete Zellverbinder verbindet somit sowohl die Zellen innerhalb einer gemeinsam ausgestalteten Ebene als auch zwischen übereinander angeordneten Ebenen elektrisch leitend.

Der Klemmabschnitt dient der vorteilhaften Positionssicherung des Zellverbinders und der Zellen. Der Klemmabschnitt umfasst wenigstens zwei Kontaktfedern zur klemmenden Kontaktierung mit wenigstens einer dritten Zelle in der ersten Zellebene und wenigstens eine Haltevorrichtung zur kraftschlüssigen, insbesondere reibschlüssigen, Halterung des Zellverbinders in dem Zellhalter. Bevorzugt kontaktiert jede Kontaktfeder jeweils eine dritte Zelle in der ersten Zellebene. Die dritten Zellen sind bevorzugt benachbart, insbesondere parallel, zu der ersten Zelle in der ersten Zellebene angeordnet. Die wenigstens zwei Kontaktfedern sind bevorzugt derart ausgestaltet, dass die wenigstens eine dritte Zelle an deren Mantelfläche klemmend kontaktierbar ist. Die wenigstens eine Haltevorrichtung ist bevorzugt als Nase, Widerhaken, raspelförmige Vorrichtung, Dreieck, Zacken, Trapez und/oder anderweitige Haltevorrichtung ausgestaltet. Der Kontaktabschnitt kontaktiert die erste Zelle, insbesondere den Pol der ersten Zelle, bevorzugt lediglich indirekt über den Polabschnitt des Zellverbinders. Der Zellverbinder wird beispielhaft zur Montage in einem Zellensystem gemäß dem zweiten Aspekt entlang einer Haupterstreckungsrichtung des Klemmabschnitts eingesteckt. Die wenigstens eine Haltevorrichtung ist somit vorzugsweise zu dem Polkontakt zeigend verjüngt, um ein Einstecken des Zellverbinders zu erleichtern und gegenteilig ein Herausziehen des Zellverbinders zu erschweren oder zu verhindern.

Ein derart ausgestalteter Zellverbinder ist besonders vorteilhaft, da eine flexible Skalierung von Zellen zur Speicherung von elektrischer Energie in einem Zellhalter, sowie eine positionssichere elektrisch leitende Verbindung von wenigstens zwei Zellen mit einfachen und kostengünstigen Mitteln erzeugt wird.

Gemäß einer bevorzugten Ausführungsform des erfindungsgemäßen Zellverbinders ist vorgesehen, dass der Zellverbinder einstückig ausgestaltet ist und/oder dass der Zellverbinder zwei Haupterstreckungsebenen umfasst, wobei der Polkontakt in einer ersten Haupterstreckungsebene und der Klemmabschnitt in einer zweiten Haupterstreckungsebene angeordnet sind, wobei die erste Haupterstreckungsebene und die zweite Haupterstreckungsebene winklig, insbesondere rechtwinklig oder im Wesentlichen rechtwinklig, zueinander angeordnet sind. Der Zellverbinder ist bevorzugt einstückig ausgestaltet. Insbesondere ist der Zellverbinder aus einem flächigen, plattenförmigen und/oder blechartigem Material, insbesondere einem Metall und/oder einer Metalllegierung, gestanzt und/oder gebogen. Die zwei Haupterstreckungsebenen können anschaulich beispielhaft als horizontale erste Haupterstreckungsebene entlang einer oberen und/oder unteren Stirnseite einer Zelle sowie als vertikale zweite Haupterstreckungsebene entlang einer Haupterstreckungsrichtung einer Zelle verstanden werden. Die Haupterstreckungsebenen sind hier beispielhaft am eingebauten Zustand von den Zellen und den Zellverbindern in einem Zellensystem gemäß dem zweiten Aspekt beschrieben. Der Zellverbinder weist somit beispielhaft eine L-förmige Ausgestaltung auf, insbesondere wobei die elektrische Kontaktierung eines Pols durch den Polabschnitt in der vertikalen ersten Haupterstreckungsebene und die Positionssicherung des Zellverbinders und/oder der Zellen durch die konstruktiven Merkmale des Klemmabschnitts in der horizontalen zweiten Haupterstreckungsebene erfolgt. Ein derart ausgestalteter Zellverbinder ist besonders einfach und kostengünstig zu fertigen und erfordert einen geringen Zeitaufwand für die Herstellung und dessen Einbau bspw. in einem Zellensystem gemäß einem später beschriebenen zweiten Aspekt.

Gemäß einer bevorzugten Ausführungsform des erfindungsgemäßen Zellverbinders ist vorgesehen, dass die wenigstens eine Haltevorrichtung zwischen den wenigstens zwei Kontaktfedern angeordnet ist. Eine derartige konstruktive Ausgestaltung eines erfindungsgemäßen Zellverbinders ermöglicht vorteilhaft eine besonders effiziente Materialausnutzung bei gleichzeitig verbesserter Stabilität des Zellverbinders. Die seitlichen Kontaktfedern und die wenigstens eine mittlere Haltevorrichtung sind zumindest abschnittsweise getrennt ausgestaltet, insbesondere, um eine federnde Bewegung der Kontaktfedern vorteilhaft zu ermöglichen. Die seitlichen Kontaktfedern und die wenigstens eine mittlere Haltevorrichtung sind bevorzugt stoffschlüssig wenigstens mit dem Polkontakt, insbesondere zusätzlich miteinander, verbunden. Durch die mittige Anordnung der wenigstens einen Haltevorrichtung wird eine vorteilhafte Positionssicherung des Zellverbinders und somit eine bevorzugte Federkraftaufbringung durch die Kontaktfedern ermöglicht.

Gemäß einer bevorzugten Ausführungsform des erfindungsgemäßen Zellverbinders ist vorgesehen, dass die wenigstens eine Haltevorrichtung zumindest abschnittsweise aus dem Klemmabschnitt gestanzt und/oder gebogen ist und/oder dass der Klemmabschnitt wenigstens zwei Haltevorrichtungen umfasst, wobei die wenigstens zwei Haltevorrichtungen zumindest abschnittsweise aus dem Klemmabschnitt in gegensätzliche Richtungen gestanzt und/oder gebogen sind. Bevorzugt ist die wenigstens eine Haltevorrichtung zumindest abschnittsweise aus der zweiten Haupterstreckungsebene heraus gestanzt und/oder gebogen. Bevorzugt weist der Klemmabschnitt mehrere Haltevorrichtungen auf, insbesondere wobei die mehreren Haltevorrichtungen in einer oder mehreren Reihen, insbesondere parallelen Reihen, angeordnet sind. Die Haltevorrichtungen sind bevorzugt zumindest abschnittsweise aus dem Klemmabschnitt in gegensätzliche Richtungen gestanzt und/oder gebogen.

Gemäß einer bevorzugten Ausführungsform des erfindungsgemäßen Zellverbinders ist vorgesehen, dass der Klemmabschnitt wenigstens eine Reihe aus Haltevorrichtungen umfasst, insbesondere wobei sich die Reihe aus Haltevorrichtungen entlang einer Haupterstreckungsrichtung des Klemmabschnitts erstreckt. Vorzugsweise weist der Klemmabschnitt zwei oder mehrere parallele Reihen aus Haltevorrichtungen auf. Der Zellverbinder wird, wie zuvor beschrieben, bspw. entlang einer Haupterstreckungsrichtung des Klemmabschnitts eingesteckt. Die Reihen an Haltevorrichtung sind somit vorzugsweise zu dem Polkontakt zeigend verjüngt, um ein Einstecken des Zellverbinders zu erleichtern und gegenteilig ein Herausziehen des Zellverbinders zu erschweren und/oder zu verhindern. Bei einer Anordnung von Haltevorrichtungen in Reihen sind die Haltevorrichtungen bevorzugt zumindest abschnittsweise aus dem Klemmabschnitt längs und/oder quer in gegensätzliche Richtungen gestanzt und/oder gebogen. Ein derart ausgestalteter Zellverbinder ist besonders vorteilhaft, da der Klemmabschnitt einen besonders vorteilhaften Halt und eine verbesserte Positionssicherung des Zellverbinders mit einfachen und kostengünstigen Mitteln ermöglicht.

Gemäß einer bevorzugten Ausführungsform des erfindungsgemäßen Zellverbinders ist vorgesehen, dass der Zellverbinder wenigstens eine Versteifungsstruktur umfasst, wobei sich die Versteifungsstruktur zumindest abschnittsweise entlang des Polkontakts und/oder des Klemmabschnitts erstreckt. Eine Versteifungsstruktur ist bevorzugt als Versteifungssicke ausgestaltet. Bevorzugt ist die Versteifungsstruktur um und/oder in der Ecke des Zellverbinders zwischen dem Polkontakt und dem Klemmabschnitt angeordnet. Alternativ oder zusätzlich ist die wenigstens eine Versteifungsstruktur innerhalb des Polkontakts und/oder des Klemmabschnitts ausgestaltet. Eine Versteifungsstruktur ist eine vorteilhafte Weiterentwicklung des erfindungsgemäßen Zellverbinders, da die konstruktive Stabilität des Zellverbinders mit einfachen und kostengünstigen Mitteln vorteilhaft verbessert wird.

Gemäß einer bevorzugten Ausführungsform des erfindungsgemäßen Zellverbinders ist vorgesehen, dass die wenigstens zwei Kontaktfedern, insbesondere aus der zweiten Haupterstreckungsebene heraus, zumindest abschnittsweise plastisch verdreht und/oder gebogen sind. Der Zellverbinder ist, wie zuvor beschrieben, bevorzugt aus einem flächigen, plattenförmigen und/oder blechartigem Material gestanzt und/oder gebogen. Vorzugsweise sind die Kontaktfedern zumindest abschnittsweise plastisch verdreht und/oder gebogen, insbesondere sind die wenigstens zwei Kontaktfeder bevorzugt plastisch tordiert. Durch die Torsion, Verdrehung und/oder die Biegung wird eine federnde Kraftauswirkung durch die Kontaktfedern auf die wenigstens eine dritte Zelle ermöglicht. Die Biegung erzeugt vorzugsweise jeweils ein halbrundes freies Ende der wenigstens zwei Kontaktfedern für eine vorteilhafte Kontaktierung zwischen den Kontaktfedern und der wenigstens einen dritten Zelle.

Gemäß einer bevorzugten Ausführungsform des erfindungsgemäßen Zellverbinders ist vorgesehen, dass die wenigstens zwei Kontaktfedern, insbesondere der Zellverbinder, spiegelsymmetrisch entlang einer Haupterstreckungsrichtung des Klemmabschnitts ausgestaltet sind. Eine Symmetrie entlang einer Ebene entlang der Haupterstreckungsrichtung des Klemmabschnitts ermöglicht eine besonders einfache und kostengünstige Fertigung sowie einen verbesserten Einbau mit geringerem Zeit- und Kostenaufwand für den Zellverbinder.

Gemäß einem zweiten Aspekt zeigt die vorliegende Erfindung ein Zellensystem, aufweisend wenigstens einen Zellhalter mit wenigstens zwei übereinander angeordneten Zellebenen sowie eine Vielzahl an Zellverbindern, der Zellhalter aufweisend eine Vielzahl von Aufnahmeräumen für Zellen zur Speicherung von elektrischer Energie und eine Vielzahl von Gegenklemmabschnitten zur Befestigung der Vielzahl an Zellverbindern, wobei die Zellverbinder nach dem ersten Aspekt ausgestaltet sind. Bei dem beschriebenen Zellensystem ergeben sich sämtliche Vorteile, die bereits zu dem Zellverbinder gemäß dem ersten Aspekt der Erfindung beschrieben worden sind. Die Zellhalter sind bevorzugt stapelbar ausgestaltet. Das Zellensystem weist wenigstens zwei übereinander angeordneten Zellebenen mit jeweils einer Vielzahl benachbarten Aufnahmeräumen für Zellen innerhalb einer Zellebene auf. Ein derart ausgestaltetes Zellensystem ist besonders vorteilhaft, da eine flexible Skalierung von Zellen zur Speicherung von elektrischer Energie in einem Zellhalter, sowie eine positionssichere elektrisch leitende Verbindung von wenigstens zwei Zellen mit einfachen und kostengünstigen Mitteln ermöglicht wird. Die Aufnahmeräume sind bspw. als Negativform der Zellen zu verstehen. Bevorzugt weisen die Aufnahmeräume einen geringfügig größeren Innendurchmesser als den Außendurchmesser der Zellen auf, um eine Einführung der Zellen in die Aufnahmeräume zu erleichtern und/oder zu ermöglichen. Bevorzugt ist jeder Aufnahmeraum zur Aufnahme einer Zelle, insbesondere ausschließlich einer Zelle, ausgestaltet. Der Gegenklemmabschnitt dient der Einführung des Klemmabschnitts des Zellverbinders. Bei eingeführtem Zellverbinder ist der Klemmabschnitt bevorzugt vollständig oder im Wesentlichen vollständig in dem Gegenklemmabschnitt eingeführt. Der Polkontakt des Zellverbinders ist bei eingeführtem Zellverbinder mit dem Pol einer in einem Aufnahmeraum eingeführten Zelle kontaktierend ausgestaltet. Die wenigstens eine Haltevorrichtung hält den Zellverbinder kraftschlüssig in dem Gegenklemmabschnitt des Zellhalters. Bevorzugt weist in einem erfindungsgemäßen Zellensystem jede Zelle und/oder jeder Aufnahmeraum für eine Zelle einen Gegenklemmabschnitt zur Aufnahme für einen Zellhalter und/oder einen Zellhalter auf. In einem erfindungsgemäßen Zellensystem werden somit durch die Zellhalter die Zellen vorteilhaft elektrisch leitend miteinander verbunden und eine Positionssicherung der Zellen in den Aufnahmeräumen des Zellhalters kostengünstig und mit einfachen Mitteln ermöglicht.

Gemäß einer bevorzugten Ausführungsform des erfindungsgemäßen Zellensystems ist vorgesehen, dass die Vielzahl von Gegenklemmabschnitten als Gegenklemmschlitze, insbesondere als parallele Gegenklemmschlitze, zur Befestigung der Vielzahl an Zellverbindern ausgestaltet sind. Eine Ausgestaltung der Gegenklemmabschnitt als gemeinsam ausgeführte Gegenklemmschlitze stellt eine besonders einfache und kostengünstige Fertigungsmöglichkeit der Gegenklemmabschnitte dar. Die Gegenklemmschlitze können tlw. oder vollständig durch die Aufnahmeräume für die Zellen verlaufend ausgestaltet sein. Die Gegenklemmschlitze sind bevorzugt linear, insbesondere parallel zueinander, angeordnet. Die Gegenklemmschlitze sind bevorzugt zumindest abschnittsweise zwischen den Zellen einer Ebene angeordnet.

Ein erfindungsgemäßer Zellverbinder sowie ein Zellensystem werden nachfolgend anhand von Zeichnungen näher erläutert. Es zeigen jeweils schematisch:
- Figur 1: in einer perspektivischen Ansicht einen Zellverbinder mit einem Polkontakt und einem Klemmabschnitt mit zwei Kontaktfedern und vier Haltevorrichtungen,
- Figur 2: in einer perspektivischen Ansicht ein Zellensystem mit einem Zellhalter und einer Vielzahl an Zellverbindern,
- Figur 3: in einer perspektivischen Ansicht ein Zellensystem mit einem Zellhalter und einer Vielzahl an Zellverbindern,
- Figur 4: in einer perspektivischen Ansicht einen Zellverbinder mit einem Polkontakt und einem Klemmabschnitt mit zwei Kontaktfedern und acht Haltevorrichtungen in zwei Reihen, und
- Figur 5: in einer perspektivischen Ansicht einen Zellverbinder mit einem Polkontakt und einem Klemmabschnitt mit zwei Kontaktfedern und vier Haltevorrichtungen.

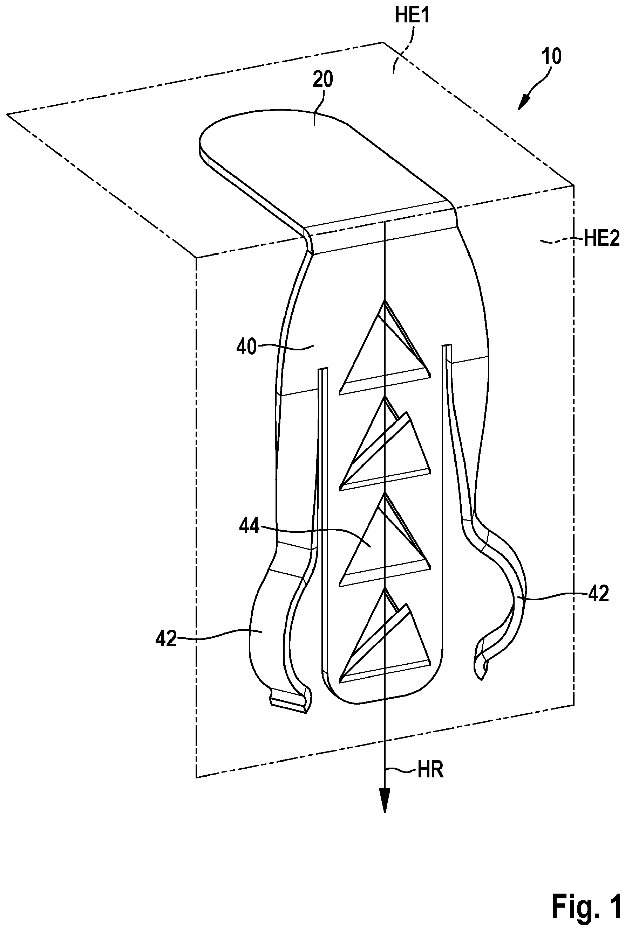

Elemente mit gleicher Funktion und Wirkungsweise sind in den Fig. 1 bis 5 jeweils mit denselben Bezugszeichen versehen.

In Fig. 1 ist in einer perspektivischen Ansicht ein Zellverbinder 10 mit einem Polkontakt 20 und einem Klemmabschnitt 40 mit zwei Kontaktfedern 42 und vier Haltevorrichtungen 44 gezeigt. Die Haltevorrichtungen 44 sind in einer Linie entlang der Haupterstreckungsrichtung HR des Klemmabschnitts 40 in der zweiten Haupterstreckungsebene HE2 des Zellverbinders 10 angeordnet. Die Haltevorrichtungen 44 sind als Dreiecke ausgestaltet und abwechselnd in gegensätzliche Richtungen aus der zweiten Haupterstreckungsebene HE2 des Klemmabschnitts 40 zumindest tlw. heraus gestanzt und gebogen. Die Haltevorrichtungen 44 ermöglichen ein einfaches und zumindest tlw. geführtes Einschieben des Zellverbinders 10 in einen Zellhalter (nicht gezeigt) und verhindern und/oder erschweren durch ihre konstruktive Ausgestaltung ein Herausziehen des Zellverbinders 10 aus dem Zellhalter (nicht gezeigt). Die Haltevorrichtungen 44 sind zwischen den zwei Kontaktfedern 42 angeordnet und ermöglichen somit einen besonders vorteilhaften Halt und eine Positionssicherung des Zellverbinders 10 in einem erfindungsgemäßen Zellensystem (nicht gezeigt). Der Polkontakt 20 ist rechtwinklig zu dem Klemmabschnitt 40 in einer ersten Haupterstreckungsebene HE1 des Zellverbinders angeordnet. Ein derart ausgestalteter Zellverbinder 10 ist besonders vorteilhaft, da eine flexible Skalierung von Zellen (nicht gezeigt) zur Speicherung von elektrischer Energie in einem Zellhalter (nicht gezeigt), sowie eine positionssichere elektrisch leitende Verbindung von wenigstens zwei Zellen (nicht gezeigt) mit einfachen und kostengünstigen Mitteln erzeugbar ist.

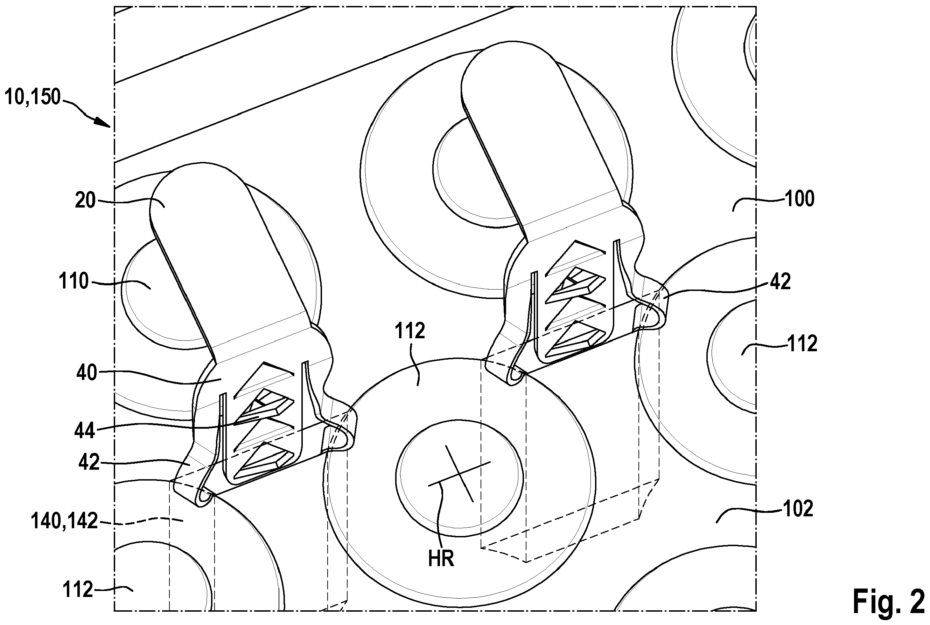

In Fig. 2 ist in einer perspektivischen Ansicht ein Zellensystem 150 mit einem Zellhalter 100 und einer Vielzahl an Zellverbindern 10 gezeigt. Die Zellen 110, 112 sind benachbart in der ersten Zellebene 102 angeordnet und in Aufnahmeräume 104 für Zellen 110, 111, 112 zur Speicherung von elektrischer Energie entlang einer Haupterstreckungsrichtung HR angeordnet. Die Vielzahl von Zellverbindern 10, hier zwei gezeigte Zellverbinder 10, werden zwischen den benachbarten Zellen 110, 112 in Gegenklemmabschnitte 140 eingesteckt. Die Gegenklemmabschnitte 140 sind beispielhaft als Gegenklemmschlitze 142 ausgestaltet. Im eingeschobenen Zustand kontaktieren die Polkontakte 20 der Zellverbinder 10, hier mit der Unterseite, jeweils einen Pol einer ersten Zelle 110 in der ersten Zellebene 102. Die Oberseite des Polkontakts ist in der gezeigten Ausgestaltung derart ausgebildet, dass sie einen Pol einer zweiten Zelle (nicht gezeigt), die in einer über der ersten Zellebene 102 liegenden zweiten Zellebene 103 angeordnet ist, kontaktiert. Die zwei Kontaktfedern 42 des Klemmabschnitts 40 kontaktieren jeweils eine dritte Zelle 112 klemmend, hier insgesamt zwei dritte Zellen 112 pro Zellhalter 10. Die Haltevorrichtungen 44 des Klemmabschnitts 40 ermöglichen eine Positionssicherung der Zellverbinder 10 in den Gegenklemmabschnitten 140 im eingeschobenen Zustand.

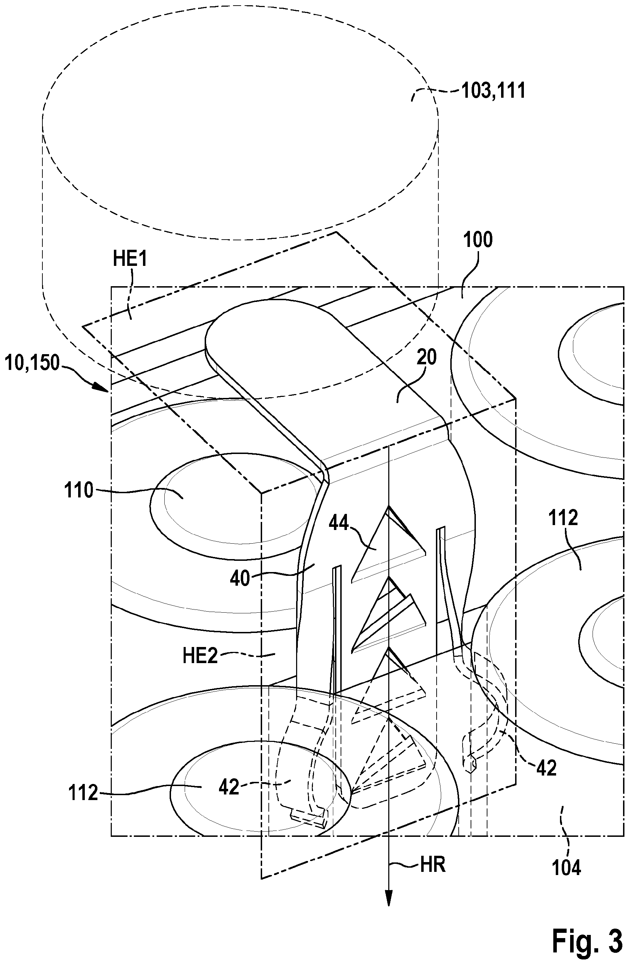

In Fig. 3 ist in einer perspektivischen Ansicht ein Zellensystem 150 mit einem Zellhalter 100 und einer Vielzahl an Zellverbindern 10 gezeigt. Schematisch ist in Fig. 3 die Kontaktierung des Polkontakts 20 des Zellverbinders 10 mit einem Pol einer zweiten Zelle 111 gezeigt, wobei die zweite Zelle 111 in einer zweiten Zellebene 103 angeordnet ist. Die zweite Zellebene 103 ist beispielhaft oberhalb der ersten Zellebene 102 angeordnet. In Fig. 3 ist der Zellverbinder 10 zur besseren Veranschaulichung nicht vollständig in den Zellhalter 100 eingeschoben. Der Polkontakt 20 des Zellverbinders kontaktiert im vollständig eingeschobenen Zustand sowohl mit der Unterseite den oberen Pol der ersten Zelle 110 der ersten Zellebene 102 als auch mit der Oberseite den unteren Pol der zweiten Zelle 111 der zweiten Zellebene 103. Die Kontaktfeder 42 kontaktieren jeweils klemmend eine dritte Zelle 112, wobei die dritten Zellen 112 benachbart zur ersten Zelle 110 in der ersten Zellebene 102 angeordnet sind.

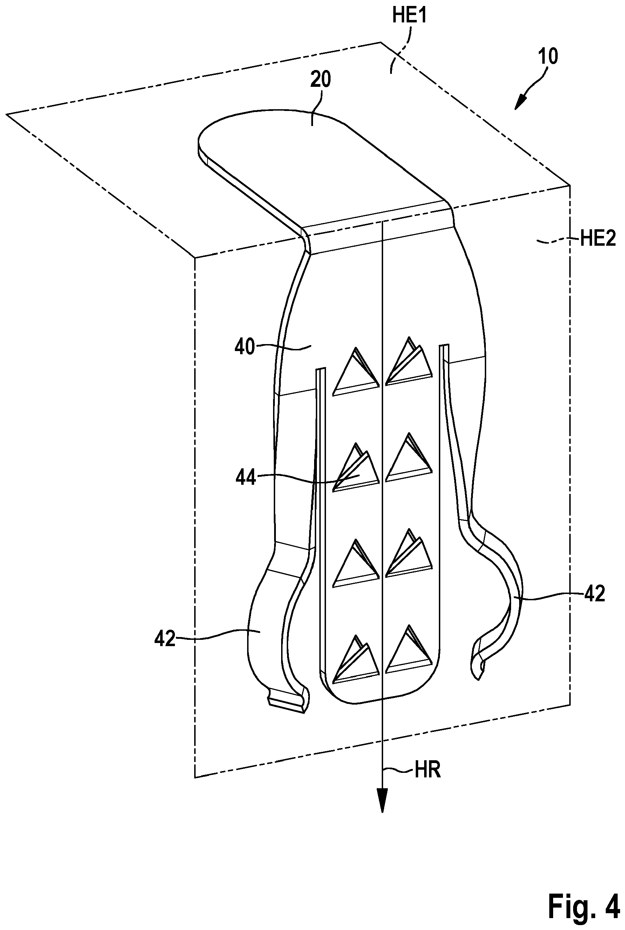

In Fig. 4 ist in einer perspektivischen Ansicht ein Zellverbinder 10 mit einem Polkontakt 20 und einem Klemmabschnitt 40 mit zwei Kontaktfedern 42 und acht Haltevorrichtungen 44 in zwei Reihen gezeigt. Die Haltevorrichtungen 44 sind in zwei parallelen Linien entlang der Haupterstreckungsrichtung HR des Klemmabschnitts 40 in der zweiten Haupterstreckungsebene HE2 des Zellverbinders 10 angeordnet. Die Haltevorrichtungen 44 sind als Dreiecke ausgestaltet und vertikal wie horizontal abwechselnd in gegensätzliche Richtungen aus der zweiten Haupterstreckungsebene HE2 des Klemmabschnitts 40 zumindest tlw. heraus gestanzt und gebogen. Die Haltevorrichtungen 44 ermöglichen ein einfaches und zumindest tlw. geführtes Einschieben des Zellverbinders 10 in einen Zellhalter (nicht gezeigt) und verhindern und/oder erschweren durch ihre konstruktive Ausgestaltung ein Herausziehen. Die Haltevorrichtungen 44 sind zwischen den zwei Kontaktfedern 42 angeordnet und ermöglichen somit einen besonders vorteilhaften Halt und eine Positionssicherung des Zellverbinders 10 in einem erfindungsgemäßen Zellensystem (nicht gezeigt). Der Polkontakt 20 ist rechtwinklig zu dem Klemmabschnitt 40 in einer ersten Haupterstreckungsebene HE1 des Zellverbinders angeordnet. Ein derart ausgestalteter Zellverbinder 10 ist besonders vorteilhaft, da eine flexible Skalierung von Zellen (nicht gezeigt) zur Speicherung von elektrischer Energie in einem Zellhalter (nicht gezeigt), sowie eine positionssichere elektrisch leitende Verbindung von wenigstens zwei Zellen (nicht gezeigt) mit einfachen und kostengünstigen Mitteln erzeugbar ist.

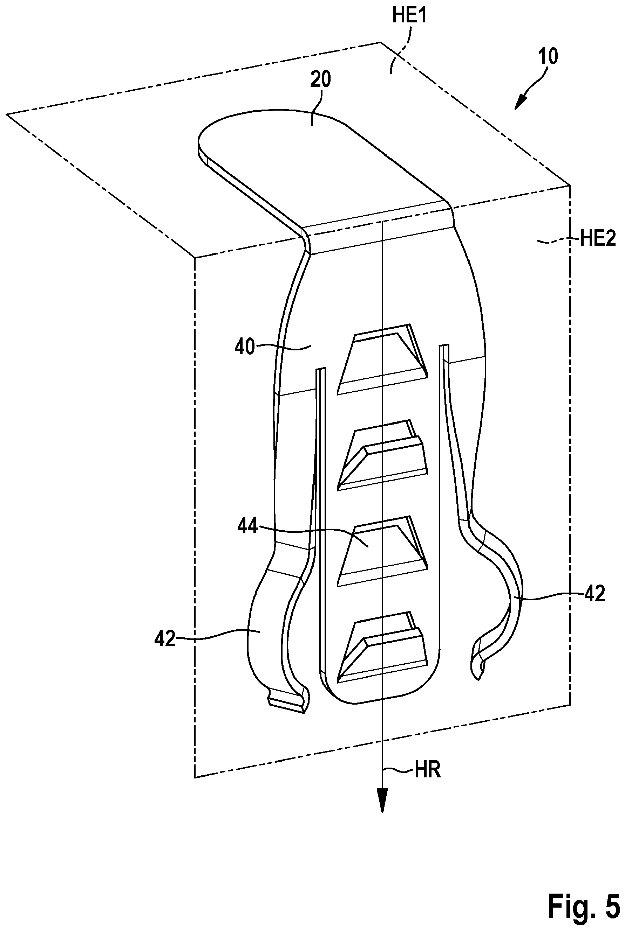

In Fig. 5 ist in einer perspektivischen Ansicht ein Zellverbinder 10 mit einem Polkontakt 20 und einem Klemmabschnitt 40 mit zwei Kontaktfedern 42 und vier Haltevorrichtungen 44 gezeigt. Die Haltevorrichtungen 44 sind trapezförmig ausgestaltet und ermöglichen somit eine vergrößerte Reibfläche zwischen den Haltevorrichtungen 44 und einem Gegenklemmabschnitt (nicht gezeigt) eines Zellhalters (nicht gezeigt) und somit eine verbesserte Standzeit und/oder Haltbarkeit und/oder Positionssicherung des Zellverbinders.

## Patentansprüche

1. Zellverbinder (10) zum elektrisch leitenden Verbinden von Zellen (110, 111, 112) zur Speicherung von elektrischer Energie in einem Zellhalter (100), der Zellhalter (100) umfassend wenigstens zwei übereinander angeordnete Zellebenen (102, 103), der Zellverbinder (10) aufweisend einen Polkontakt (20) und einen Klemmabschnitt (40), wobei der Polkontakt (20) zur elektrischen Kontaktierung einer ersten Zelle (110) in einer ersten Zellebene (102) mit einer zweiten Zelle (111) in einer zweiten Zellebene (103) ausgestaltet ist, wobei der Klemmabschnitt (40) wenigstens zwei Kontaktfedern (42) zur klemmenden Kontaktierung mit wenigstens einer dritten Zelle (112) in der ersten Zellebene (102) und wenigstens eine Haltevorrichtung (44) zur kraftschlüssigen Halterung des Zellverbinders (10) in dem Zellhalter (100) umfasst.

2. Zellverbinder (10) nach Anspruch 1,
**dadurch gekennzeichnet,**
**dass** der Zellverbinder (10) einstückig ausgestaltet ist und/oder dass der Zellverbinder (10) zwei Haupterstreckungsebenen (HE1, HE2) umfasst, wobei der Polkontakt (20) in einer ersten Haupterstreckungsebene (HEI) und der Klemmabschnitt (40) in einer zweiten Haupterstreckungsebene (HE2) angeordnet sind, wobei die erste Haupterstreckungsebene (HE1) und die zweite Haupterstreckungsebene (HE2) winklig, insbesondere rechtwinklig, zueinander angeordnet sind.

3. Zellverbinder (10) nach einem der vorangegangenen Ansprüche,
**dadurch gekennzeichnet,**
**dass** die wenigstens eine Haltevorrichtung (44) zwischen den wenigstens zwei Kontaktfedern (42) angeordnet ist.

4. Zellverbinder (10) nach einem der vorangegangenen Ansprüche,
**dadurch gekennzeichnet,**
**dass** die wenigstens eine Haltevorrichtung (44) zumindest abschnittsweise aus dem Klemmabschnitt (40) gestanzt und/oder gebogen ist und/oder dass der Klemmabschnitt (40) wenigstens zwei Haltevorrichtungen (44) umfasst, wobei die wenigstens zwei Haltevorrichtungen (44) zumindest abschnittsweise aus dem Klemmabschnitt (40) in gegensätzliche Richtungen gestanzt und/oder gebogen sind.

5. Zellverbinder (10) nach einem der vorangegangenen Ansprüche,
**dadurch gekennzeichnet,**
**dass** der Klemmabschnitt (40) wenigstens eine Reihe aus Haltevorrichtungen (44) umfasst, insbesondere wobei sich die Reihe aus Haltevorrichtungen (44) entlang einer Haupterstreckungsrichtung (HR) des Klemmabschnitts (40) erstreckt.

6. Zellverbinder (10) nach einem der vorangegangenen Ansprüche,
**dadurch gekennzeichnet,**
**dass** der Zellverbinder (10) wenigstens eine Versteifungsstruktur umfasst, wobei sich die Versteifungsstruktur zumindest abschnittsweise entlang des Polkontakts (20) und/oder des Klemmabschnitts (40) erstreckt.

7. Zellverbinder (10) nach einem der vorangegangenen Ansprüche,
**dadurch gekennzeichnet,**
**dass** die wenigstens zwei Kontaktfedern (42), insbesondere aus der zweiten Haupterstreckungsebene (HE2) heraus, zumindest abschnittsweise plastisch verdreht und/oder gebogen sind.

8. Zellverbinder (10) nach einem der vorangegangenen Ansprüche,
**dadurch gekennzeichnet,**
**dass** die wenigstens zwei Kontaktfedern (42), insbesondere der Zellverbinder (10), spiegelsymmetrisch entlang einer Haupterstreckungsrichtung (HR) des Klemmabschnitts (40) ausgestaltet ist.

9. Zellensystem (150), aufweisend wenigstens einen Zellhalter (100) mit wenigstens zwei übereinander angeordneten Zellebenen (102) sowie eine Vielzahl an Zellverbindern (10), der Zellhalter (100) aufweisend eine Vielzahl von Aufnahmeräumen (104) für Zellen (110, 111, 112) zur Speicherung von elektrischer Energie und eine Vielzahl von Gegenklemmabschnitten (140) zur Befestigung der Vielzahl an Zellverbindern (10),
**dadurch gekennzeichnet,**
**dass** die Zellverbinder (10) nach einem der Ansprüche 1 bis 8 ausgestaltet sind.

10. Zellensystem (150) nach Anspruch 9,
**dadurch gekennzeichnet,**
**dass** die Vielzahl von Gegenklemmabschnitten (140) als Gegenklemmschlitze (142), insbesondere als parallele Gegenklemmschlitze (142), zur Befestigung der Vielzahl an Zellverbindern (10) ausgestaltet sind.
